# EUROPÄISCHE PATENTSCHRIFT

(11) **EP 1 181 636 B1**
(45) Veröffentlichungstag und Bekanntmachung des Hinweises auf die Patenterteilung: **08.01.2003**
(21) Anmeldenummer: 00902527.1
(22) Anmeldetag: 14.02.2000
(51) Int. Cl.: G06F 3/023

(54) **PERIPHERIEGERÄT MIT EINER DRAHTLOSEN ÜBERTRAGUNGSVORRICHTUNG**
PERIPHERAL DEVICE WITH WIRELESS TRANSMISSION DEVICE
PERIPHERIQUE COMPORTANT UN DISPOSITIF DE TRANSMISSION SANS FIL

(30) Priorität: 21.04.1999 CH 73299
(43) Veröffentlichungstag der Anmeldung: 27.02.2002
(73) Patentinhaber: Siemens Schweiz AG, 8047 Zürich (CH)
(72) Erfinder: FOGNINI, Bruno, CH-8048 Zürich (CH); FUESSER, Leonhard, CH-8051 Zürich (CH); OBERHOLZER, Beat, CH-5707 Seengen (CH); SCHACHER, Edgar, CH-8955 Oetwil (CH)
(86) Internationale Anmeldenummer: CH0000083
(87) Internationale Veröffentlichungsnummer: WO00063767

(56) Entgegenhaltungen:
- US-A- 5 708 458
- US-A- 5 781 405
- US-A- 5 878 276

## Beschreibung

Die vorliegende Erfindung betrifft ein Peripheriegerät nach dem Oberbegriff des Patentanspruchs 1.

Die Ausstattung von Endeinrichtungen wie beispielsweise von Personalcomputern mit verschiedenen Peripheriegeräten und Datennetzanschlusseinheiten zu einem öffentlichen Telekommunikationsnetz oder zu einem lokalen Netzwerk LAN erfordert einen erheblichen Verkabelungsaufwand. Einerseits kann dadurch die gewünschte Verfügbarkeit durch eine unachtsame Behandlung einer solchen Verkabelung beeinträchtigt werden. Andererseits lässt sich nicht in allen Gebäuden die Verkabelung auf den notwendigen Stand der Technik bringen. Wirtschaftliche, praktische wie auch ästhetische Gründe lassen oft eine solche Verkabelung nicht zu.

Ein solches Verkabelungsproblem tritt auch bei der zunehmenden Nutzung von ISDN in privaten Haushalten auf: Dies bedingt aber die Führung eines vierdrähtig ausgeführten S-Busses in einer Wohnung oder in einem Einfamilienhaus.

Die Technik einer drahtlosen Ankoppelung eines Personalcomputers, eines FAX-Gerätes oder eines Telefones ist hier eine geeignete Lösung. Mittels DECT-Technologie gemäss ETSI-Standard EN 300 175 kann eine drahtlose Kommunikation sowohl für den Sprach- als auch den Datendienst realisiert werden. So wird in [1] ein drahtloses Netzwerk beschrieben, das eine Verbindung zu einem öffentlichen Telekommunikationsnetz (PSTN, ISDN) wie auch zu einem Lokalen Netzwerk (LAN) ermöglicht. Die Empfangs-/Sendestation ist als eigenständiges Gerät ausgebildet, an dem Endeinrichtungen wie z.B. ein Telefonapparat, ein Personalcomputer oder ein Faxgerät angeschlossen werden können. Da diese Empfangs-/Sendestation im Normalbetrieb vom Benutzer keinerlei Bedienung erfordert, wird sie aus ästhetischen Gründen oft hinter einen Pult oder in einem Möbelstück "unsichtbar" versorgt. Damit geht eine wesentliche Verschlechterung der Sendeund Empfangsbedingungen einher, so müssen z.B. ein Feldstärke-Abfall oder zusätzliche Reflexionen hingenommen werden.

In der Schrift US 5,878,276 (International Business Machines Corporation) wird ein mobiler Client Computer vorgeschlagen, der als sogenannter Master ein Computersystem und Peripheriegeräte miteinander verbindbar macht und darüber hinaus mit einer "externen" Station eine Anbindung erlaubt.

Für die Lösung des Problems der verschiedenen Empfangsbedingungen bei einer Funkanbindung eines Personalcomputers wird in der Schrift US 5.708,458 (Compaq Computer Corporation) vorgeschlagen, ein bereits vorhandenes Drahtgitter als Teil des LCD-Displays auch als Antenne für den Empfang von Radiosignalen dient. Die externen Radiosignale können dabei einem Gerät z.B. für ein Wireless-Lan oder einer drahtlos angekoppelten Tastatur entstammen. Dieses System bedingt jedoch, dass solche LCD-Displays mit zugehörigen Schreibstiften vorgesehen sind und kann deshalb auf andere Anzeigesysteme nicht angewendet werden.

In Räumen mit einer relativ grossen Anzahl von Endeinrichtungen kann sich darüber hinaus das Problem stellen, dass die verfügbaren Frequenzbänder und die verfügbare Bandbreite für die einzelne Endeinrichtung knapp wird und sich für den Benutzer als nachteilig erweist. In [2] ist ein Verfahren für eine nahezu kollisionsfreie Datenübertragung in einem tragbaren, drahtlosen lokalen Netzwerk beschrieben. Auch diese Lösung bedingt ein zusätzliches externes Gerät (Adapter) zu einem portablen Computer wie z.B. ein Laptop-Gerät. Das Mitführen eines zusätzlichen Gerätes für den Benutzer ist bezüglich der Handhabung als lästig einzustufen.

Ebenfalls bekannt ist die drahtlose Vernetzung von Personalcomputern mit dem Produkt I-Gate® [3]. Durch die Verwendung des Übertragungsverfahrens "Direct Sequence Spread Spectrum" (DSSS) kann auch in Räumen mit einer relativ hohen Dichte von solchen Übertragungsvorrichtungen eine nahezu kollissionsfreie Datenübertragung erreicht werden. Nachteilig ist, dass ein zusätzliches externenes Gerät zu jedem Personalcomputer benötigt wird, das mit einem Kabel angeschlossen werden muss.

Der vorliegenden Erfindung liegt daher die Aufgabe zugrunde, eine Vorrichtung anzugeben, die eine drahtlose Ankopplung einer Endeinrichtung an ein Netzwerk ermöglicht, keine zusätzlichen externe Adapter und damit keine zusätzlichen Kabel benötigt und einfach installierbar ist.

Diese Aufgabe wird durch die im Patentanspruch 1 angegebenen Massnahmen gelöst. Vorteilhafte Ausgestaltungen der Erfindung sind in weiteren Ansprüchen angegeben.

Das erfindungsgemässe Peripheriegerät mit einer eingebauten Sende-/Empfangseinheit bietet folgende Vorteile:
- Eine Endeinrichtung erfordert für die Ankopplung an ein Netzwerk keinen zusätzlichen Adapter, dieser ist funktional in einem zugehörigen Peripheriegerät, z.B. in einer Tastatur enthalten.
- Drahtlose Ankopplung einer Endeinrichtung zu einem Netzwerk ohne zusätzliche Verkabelung. Das erfindungsgemässe Peripheriegerät wird für die Nutzung der Endeinrichtung ohnehin benötigt.
- Einfache Installation ohne mechanische Eingriffe in die anzukoppelnde Endeinrichtung, da standardisierte Schnittstellen vorgesehen sind.
- Da das Peripheriegerät stets von einer Person zur Interaktion mit beispielsweise einem Datenverarbeitungssystem benötigt wird, ist die im Peripheriegerät enthaltende Sende-/Empfangsantenne stets in einer guten Lage zur Sende-/Empfangsantenne des betreffenden Partnergerätes, zu welchem eine drahtlose Kommunikation erfolgt.

Die Erfindung wird nachfolgend anhand einer Zeichnung beispielsweise näher erläutert. Dabei zeigt:
- Fig. 1: Übersicht der Funktionseinheiten,
- Fig. 2a: Blockschaltbild einer Tastatur mit einer eingebauten Sende-/Empfangseinheit.
- Fig. 2b: Darstellung einer Tastatur mit der Anordnung einer Sende-/Empfangsantenne.
- Fig. 3: Blockschaltbild eines Telefonhörers mit einer eingebauten Sende-/Empfangseinheit.

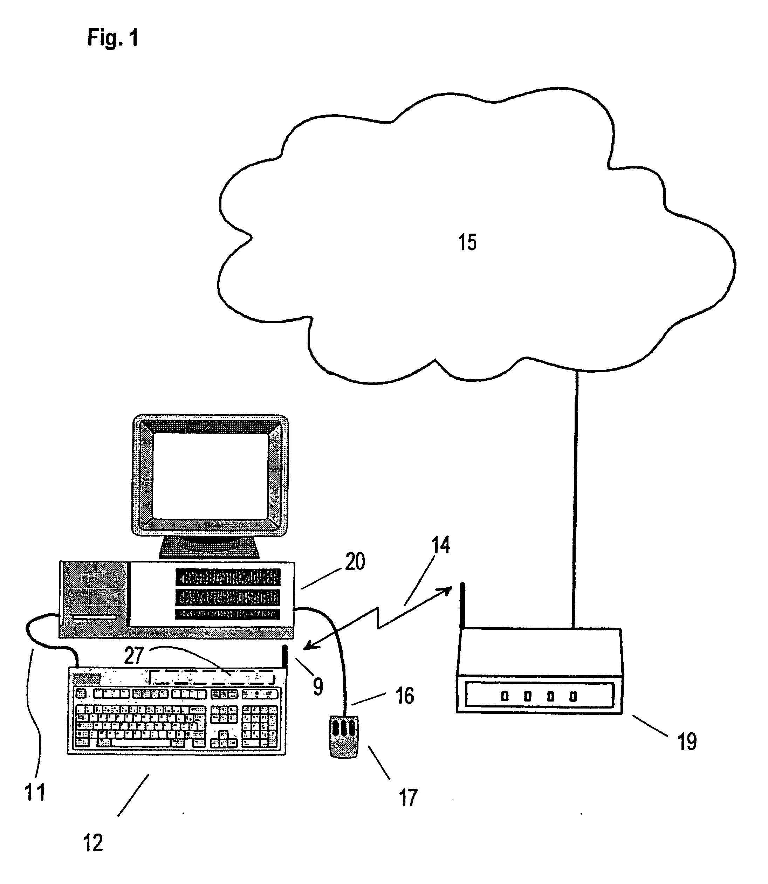

Fig. 1 zeigt ein als Datenverarbeitungssystem 20 vorgesehene Endeinrichtung. Als Peripheriegerät dient eine Tastatur 12 mit einer eingebauten Sende-/Empfangseinheit 27. Die Tastatur 12 ist über eine Verbindung 11 an das Datenverarbeitungssystem 20 angeschlossen. Die Tastatur 12 weist eine Antenne 9 auf, über die eine drahtlose und bidirektionale Verbindung 14 zu einem Partnergerät 19 erfolgt. Eine Maus 17 ist über eine Leitung 16 ebenfalls an das Datenverarbeitungssystem 20 angeschlossen. Die Verbindung 11 dient für die Übermittlung von Daten vom und zum Partnergerät wie auch für die Zuführung der von der Tastatur eingegebenen Daten. Das Partnergerät 19 ist mit einem Netzwerk 15 verbunden.

Das Netzwerk 15 kann als LAN ausgebildet sein, an dem weitere Endeinrichtungen mit dem erfindungsgemässen Peripheriegerät angeschlossen sind. Es ist aber auch möglich, dass das Partnergerät 19 an ein ISDN-, an ein PSTN-Netz oder an ein Kabelnetz für TV- und Radioprogramme angeschlossen ist. Möglich ist auch eine Anschaltung an ein als Internet ausgebildetes Netzwerk, z.B. über eine 2 Mbit/s - Strecke zu einem Internet-Service-Provider.

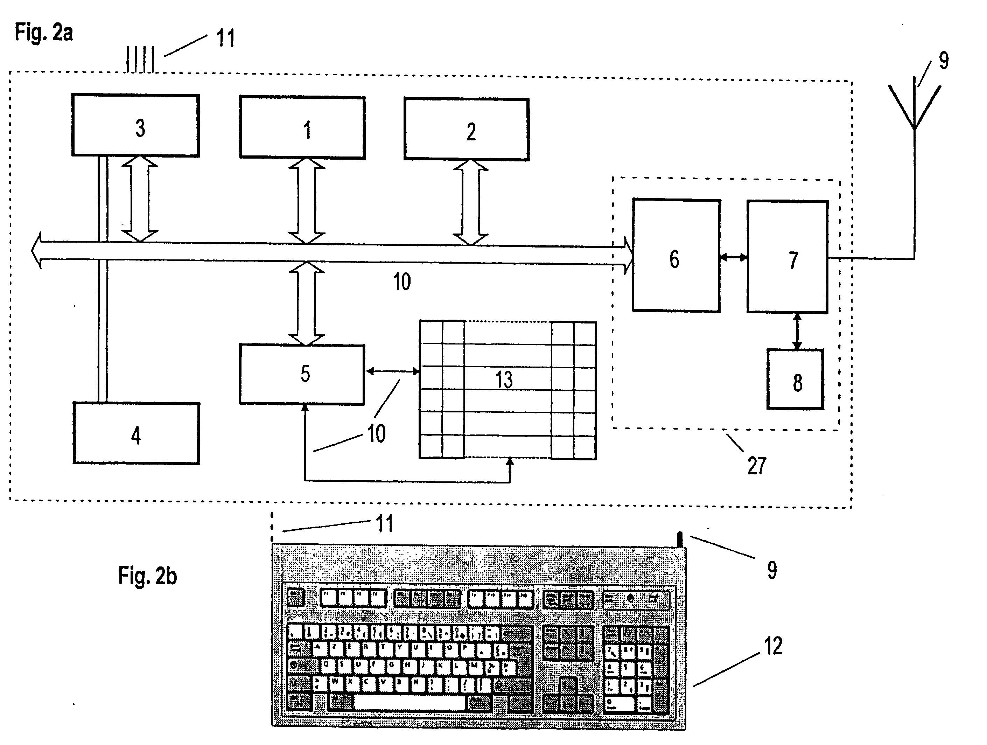

Anhand des Blockschaltbildes gemäss der Fig. 2a wird nun das erfindungsgemässe Peripheriegerät in den Einzelheiten erläutert. An einem Bus 10 sind die folgenden Einheiten angeschlossen: Prozessor 1, Speichereinheit 2, USB-Schnittstelleneinheit 3, Funksteuerbaustein 6 und Port 5 zur Anschaltung der Tasten einer Tastatur. Die Speichereinheit 2 enthält einen Festwertspeicher, z.B. Flash-PROM und einen flüchtigen Speicher RAM. Es ist auch möglich, RAM-Speicherbereiche durch sogenannte Stützkondensatoren mit Energie zu versorgen, so dass auf diese Weise ebenfalls ein Festwertspeicher gebildet wird. Die Sende-/Empfangseinheit 27 wird aus dem Funksteuerbaustein 6, einem Funkteil 7 und einem Taktgenerator 8 gebildet. An das Funkteil 7 ist eine Antenne 9 angeschlossenen. Das Funkteil 7 bezieht den Takt vom Taktgenerator 8 (Clock, Quarz).

Die Übertragung stützt sich auf das von IEEE definierte Protokoll, das als Norm [4] publiziert ist. Die Übertragung selber ist sowohl für den Infrarotbereich als auch für eine Funkübertragung auf dem sogenannten ISM-Band von 2.4 GHz spezifiziert. Für das Ausführungsbeispiel der vorliegenden Erfindung wird für den sogenannten "Physical Layer" (PHY) eine Spreizbandtechnik gewählt, die Norm erwähnt dafür zwei Übertragungsverfahren:
i) "Frequency-Hopping Spread Spectrum" (FHSS)
ii) "Direct Sequence Spread Spectrum" (DSSS).
Das Verfahren FHSS erlaubt eine Übertragungsrate von 1 Mbit/s, während das Verfahren DSSS solche von 1 und 2 Mbit/s zulässt. Für die schaltungsmässige Realisierung des Funkteils können beispielsweise Komponenten vom Hersteller Harris Semiconductor eingesetzt werden. Dazu steht unter dem Produktnamen PRISM™ ein Chipsatz zur Verfügung. Einzelheiten können der Schrift [8] entnommen werden. Die erwähnten Komponenten weisen ein sogenanntes Bus-Interface auf. Dieses erlaubt die Anschaltung des Busses 10 an den Funksteuerbaustein 6. Für die Kommunikation mit diesem Chipsatz wird vorteilhafterweise die Funktionseinheit "Media Access Controller HFA3840 MAC" oder "HFA3841 MAC benutzt und die zugehörige Konfiguration im Festwertspeicher der Speichereinheit 2 abgelegt. Einzelheiten zu dieser Funktionseinheit sind in der Schrift [7] enthalten.

Für die Anschaltung der mit der Sende-/Empfangseinheit 27 versehenen Tastatur 12 an ein Datenverarbeitungssystem 20 wird in einer bevorzugten Ausführungsform ein USB-Bus eingesetzt. In Tastaturen sind sehr oft Prozessoren der Familie 8051/8031 von Intel® eingebaut. Die Ausstattung der USB-Schnittstelle erfolgt daher vorzugsweise mit einem vom gleichen Hersteller entstammenden Controller-Baustein des Typs 8x931AA oder 8x931HA. Die Ausgestaltung der Schnittstelle kann den Schriften [6] und [7] entnommen werden. Der USB-Bus weist folgende PIN-Belegung auf:
- Pin 1:: V_{cc},
- Pin 2, 3:: Daten,
- Pin 4:: Masse.

Der gemäss der Erfindung zu ersetzende externe Adapter ist mit der vorstehend beschriebenen Schaltung und Anordnung im Peripheriegerät funktional integriert. Besonders vorteilhaft ist die Verwendung der USB-Schnittstelle, da für dieses Peripheriegerät "Tastatur und Adapter" nur noch konfigurationsmässige Anpassungen auf der Seite des Datenverarbeitungssystemes erforderlich sind. Dies erfolgt beispielsweise durch Installation von entsprechenden Software-Moduln wie Treiber oder Bibliotheksprogrammen des Typs DLL.

Es ist aber auch möglich, die Verbindung 11 der Tastatur 12 mit dem Datenverarbeitungssystem 20 auf konventionelle Weise vorzunehmen z.B. mit Anschluss an eine COMx-Schnittstelle für die Tastaturfunktionen. Eine zweite Verbindungsleitung wird zwischen Datenverarbeitungssystem 20 und der in der Tastatur 12 eingebauten Sende- und Empfangseinheit 27 vorgesehen. Diese zweite Verbindungsleitung kann z. B. direkt auf einen einen LAN-Anschluss des Datenverarbeitungssystemes geführt werden.

In Fig. 2b ist die Anordnung der Antenne 9 dargestellt. Mit der gewählten Frequenz von 2.4 GHz ist die Wellenlänge λ = 0.125 m. Mit einer λ/2- oder einer λ/4-Stabantenne ergibt sich eine Antennengrösse, die auch vollständig innerhalb der Tastatur eingebaut sein kann oder gemäss der Fig. 2b in durchaus ansprechender Gestaltung angeordnet werden kann.

Als Partnergerät 19 kann ein Datenverarbeitungssystem 20 mit dem erfindungsgemässen Peripheriegerät vorgesehen sein. Möglich ist aber auch, dass das Partnergerät 19 eine Sende-/Empfangsvorrichtung 27 aufweist, die im wesentlichen gleich aufgebaut ist wie im vorstehend beschriebenen Ausführungsbeispiel zur Tastatur 12 und eigenständig betreibbar ist. In einer weiteren Ausgestaltung des "Media Access Controller HFA3840 MAC" oder "HFA3841 MAC" wird vorgesehen, dass von diesem Partnergerät 19 mehrere Endeinrichtungen gleichzeitig adressierbar sind und dass gleichzeitig mehrere unabhängige Verbindungen aktiv schaltbar sind. Diese Ausgestaltung des "Media Access Controller HFA3840 MAC" oder "HFA3841 MAC kann auch im Ausführungsbeispiel Tastatur 12 eingesetzt werden.

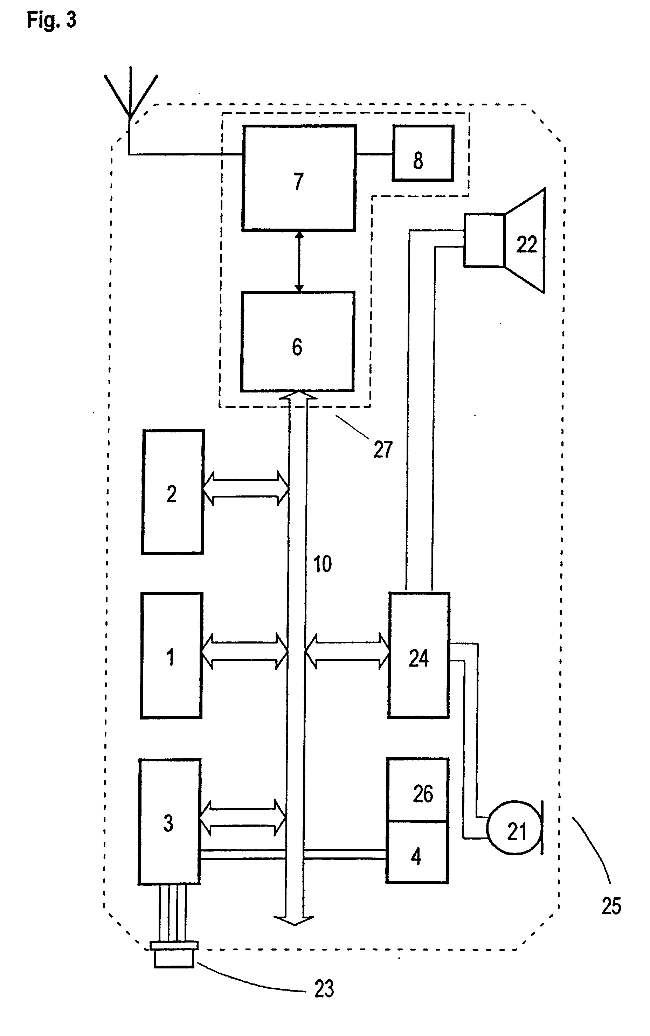

In einer weiteren bevorzugten Ausführungsform der vorliegenden Erfindung wird die Sende-/Empfangseinheit in einen Telefonhörer eingebaut. Das Blockschaltbild ist der Fig. 3 zu entnehmen. Die schaltungsmässige Ausgestaltung erfordert die Anschaltung eines A/D- und D/A-Wandlers 24, um die digital übertragenen Sprachsignale in analoge Sprachsignale zum Lautsprecher hinzuführen bzw. vom Mikrofon zum A/D-Wandler zuzuführen. Für die Sprachübertragung wird auf der USB-Strecke vorzugsweise ein "langsamer" Unterkanal von 1.5 Mbit/s Übertragungskapazität vorgesehen. Für die Sprachübertragung in ISDN-Qualität genügen dabei schon 64 kBit/s. Die zusätzliche Kapazität bis 1.5 MBit/s kann verwendet werden, um z.B. innerhalb eines drahtlosen Netzwerkes eine bessere Sprachqualität zu erlangen oder zur Sprachübertragung auch noch eine Bildübertragung vorzusehen.

Datenverarbeitungssysteme werden oft abgeschaltet, wenn sie während einer voraussehbaren Zeit nicht gebraucht werden. Das Einschalten eines Datenverarbeitungssystems dauert oft unangenehm lange. Je nach Prozessorleistung und eingesetztem Betriebssystem kann der Einschaltvorgang bis zu einigen Minuten dauern. Ist das Peripheriegerät ein Telefonhörer 25, ergeben sich dadurch unliebsame Wartezeiten, bis lediglich ein Telefongespräch geführt werden kann. Deshalb ist in einer weiteren vorteilhaften Ausgestaltung der Erfindung der Telefonhörer 25 zusätzlich mit einem der Stromversorgungseinheit 4 zugeordneten Energiespeicher 26 versehen, um über die Funkstrecke 14 auch bei abgeschaltetem Datenverarbeitungssystem 20 einen Anruf beantworten oder absetzen zu können.

Der USB-Bus erlaubt auch eine Versorgung der angeschlossenen Einheiten mit elektrischer Energie. Eine Stromversorgungsschaltung 4 ist mit der USB-Schnittstelleneinheit 3 verbunden. In dieser Schaltung werden die weiteren für die Energieversorgung der einzelnen Komponenten benötigten Spannungen erzeugt. Über das USB-Kommunikationsprotokoll kann das Datenverarbeitungssystem 20 angewiesen werden, den über die Schnittstelle USB der Tastatur zugeführten Energiebedarf zu regeln. Einzelheiten können der Schrift [9] entnommen werden. Eine solche Regelung kann vorteilhafterweise für das Aufladen des Energiespeichers 26 eingesetzt werden. Mit einer temporär erhöht zugeführten elektrischen Leistung kann der Energiespeicher in einem sogenannten Schnell-Lade-Verfahren rasch aufgeladen werden, damit baldmöglichst wieder eine hohe Autonomie des Peripheriegerätes Telefonhörer 25 erlangt wird. Da der USB Bus nur vier Leitungen aufweist, kann der Stecker 23 einfach ausgestaltet sein und gut in das Gehäuse des Telefonhörers 25 integriert werden.

Der Telefonhörer 25 kann mit Bedien- und/oder Anzeigeelementen ausgerüstet werden, um bei abgeschaltetem und/oder vom Datenverarbeitungssystem getrennter Verbindung 11 trotzdem Anrufe zu tätigen oder eingegangene Meldungen anzeigen oder versenden zu können. Dazu wird vorteilhafterweise ein Port 5 an den Bus angeschaltet (nicht dargestellt in Fig. 3).

Die Lage der Antenne ist von besonderer Bedeutung. Das erfindungsgemässe Peripheriegerät kann auch als Videokamera zu einem Datenverarbeitungssystem ausgebildet sein. Dies ist besonders vorteilhaft, da die Videokamera meist auf oder in unmittelbarer Nähe zu einem Bildschirm plaziert ist und dadurch die Funkstrecke zu einem Partnergerät leicht in einen nahezu direkten Sichtkontakt gebracht werden kann.

Das erfindungsgemässe Peripheriegerät kann auch als Maus oder als Drucker vorgesehen sein. Die schaltungsmässige Realisierung wird vorzugsweise analog zu jener wie bei der Tastatur ausgeführt. Die Verwendung der USB-Schnittstelle ist besonders vorteilhaft, da diese bei den Datenverarbeitungssystemen standardisiert und dementsprechend häufig anzutreffen ist. Die Erfindung ist aber nicht auf eine Realisierung mit einer USB-Schnittstelle beschränkt, neben der bereits erwähnten Anschaltung über PCMCIA-Slots ist es auch möglich, das erfindungsgemässe Peripheriegerät durch Multiplexierung der Daten auch an dem Fachmann bekannte parallele oder serielle Schnittstellen eines Datenverarbeitungssystemes anzuschliessen.

Die in Fig. 2a und Fig. 3 dargestellten Funktionseinheiten können teilweise oder vollumfänglich in einem einzigen elektronischen Baustein ASIC vereinigt sein. Eine Realisierung kann beispielsweise gemäss der Schrift [10] vorgenommen werden.

### Verwendete Akronyme

- ASIC: Application Specific Integrated Circuit
- DECT: Digital Enhanced Cordless Telephony
- DLL: Direct Link Library
- DSSS: Direct Sequence Spread Spectrum
- ETS: European Telecommunication Standard
- FHSS: Frequency-Hopping Spread Spectrum
- GSM: Global System for Mobile Communication
- IEEE: The Institute of Electrical and Electronics Engineers , Inc.
- ISDN: Integrated Service Digital Network
- ISM: Band for Industrial, Scientific and Medical Devices (according ETS 300 440)
- LAN: Local Area Network
- MAC: Medium Access Control
- PCMCIA: Personal Computer Memory Card International Association
- PHY: Physical Layer
- PSTN: Public Switched Telephone Network
- PHY: Physical Layer
- USB: Universal Serial Bus

### Liste der Bezugszeichen

- 1: Prozessor
- 2: Speichereinheit
- 3: USB Schnittstelleneinheit, zum Anschluss an ein Datenverarbeitungssystem vorgesehen
- 4: Stromversorgungsschaltung
- 5: Port
- 6: Funksteuerbaustein
- 7: Funkteil
- 8: Taktgenerator für Funkübertragung
- 9: Antenne
- 10: Bus
- 11: Verbindung zwischen Tastatur und Datenverarbeitungssystem
- 12: Tastatur mit eingebauter Sende-/Empfangseinheit
- 13: Tastaturmatrix
- 14: Funkverbindung zwischen Tastatur und Partnergerät
- 15: Netzwerk
- 16: Verbindung zwischen Maus und Datenverarbeitungssystem
- 17: Maus
- 18: Verbindung zwischen Ein-/Ausgabe-Einheit und Tastaturmatrix
- 19: Partnergerät mit eingebauter Sende-/Empfangseinrichtung
- 20: Datenverarbeitungssystem mit Bildschirm
- 21: Mikrofon
- 22: Lautsprecher
- 23: Stecker
- 24: DA/AD-Wandler
- 25: Telefonhörer
- 26: Energiespeicher
- 27: Sende-/Empfangseinheit

### Literaturliste

[1] U.S. Patent 5.463.623 Integrated wireless telecommunication and local area network system, Oct. 31, 1995
[2] U.S. Patent 5.684.801 Portable wireless local area network, Nov. 4, 1997
[3] Siemens Schweiz AG I-Gate® Drahtloses PC-Netzwerk, März 1999
[4] IEEE 802.11-1997 Wireless LAN Medium Access Control (MAC) an Physical Layer (PHY) Specifications
[5] Intel® March 1998 8x931AA/8x931HA Universal Serial Bus Peripheral Controller Advanced Information Datasheet
[6] Intel® 1996 USB Mobile System Design Guidelines
[7] Harris Semiconductor Description HFA3840, advanced draft Aprill4, 1998
[8] Harris Semiconductor Application Note October 1998 AN9820 A Condensed Review of Spread Spectrum Techniques for ISM Band Systems
[9] U.S. Patent 5.884.086 System and method for voltage switching to supply various voltages and power levels to a peripheral device; March 16, 1999
[10] VLSI™ - Technology wireless Communications - power and flexibility in a single chip, 1998.

## Patentansprüche

1. Peripheriegerät (12; 17; 25), das über einen ersten Kanal (11) mit einer Endeinrichtung (20) verbunden ist, die mittels einer Sende-/Empfangseinheit (27) und einer Antenne (9) über einen zweiten Kanal (14) drahtlos mit wenigstens einem Partnergerät (19) verbindbar ist, **dadurch gekennzeichnet, dass** die mit der Antenne (9) verbundene Sende-/Empfangseinheit (27) und eine Schnittstelleneinheit (3) im Peripheriegerät (12) eingebaut sind und dass über die Schnittstelleneinheit (3) der erste Kanal (11) und der zweite Kanal (14) mit der Endeinrichtung (20) verbindbar sind.

2. Peripheriegerät (12; 17; 25) nach Anspruch 1, **dadurch gekennzeichnet, dass** Daten im zweiten Kanal (14) über das ISM-Band von 2.4 GHz bidirektional übertragbar sind.

3. Peripheriegerät (12; 17; 25) nach Anspruch 1 oder 2, **dadurch gekennzeichnet, dass** der zweite Kanal (14) auf einem Protokoll gemäss der Norm IEEE 802.11 beruht.

4. Peripheriegerät (12; 17; 25) nach einem der Ansprüche 1 bis 3, **dadurch gekennzeichnet, dass** die zwischen Endeinrichtung (20) und Peripheriegerät (12) im ersten und zweiten Kanal übertragenen Daten durch Multiplexierung über das gleiche physikalische Medium übermittelbar sind .

5. Peripheriegerät (12; 17; 25) nach einem der Ansprüche 1 bis 4, **dadurch gekennzeichnet, dass** der erste Kanal (11) und/oder der zweite Kanal (14) über eine Übertragungsstrecke zwischen Peripheriegerät (12; 17; 25) und Endeinrichtung (20) geführt werden, die als Universal Serial Bus USB ausgebildet ist.

6. Peripheriegerät (12; 17; 25) nach einem der Ansprüche 1 bis 5 **dadurch gekennzeichnet, dass** das Partnergerät (19) ebenfalls eine Endeinrichtung (20) ist, die mit einem Peripheriegerät (12) verbunden ist, in das eine mit einer Antenne (9) verbundenen Sende-/Empfangseinheit (27) und eine Schnittstelleneinheit (3) eingebaut sind.

7. Peripheriegerät (12; 17; 25) nach einem der Ansprüche 1 bis 6, **dadurch gekennzeichnet, dass** als Endeinrichtung (20) ein Datenverarbeitungssystem vorgesehen ist.

8. Peripheriegerät (12; 17; 25) nach einem der Ansprüche 1 bis 7, **dadurch gekennzeichnet, dass** als Peripheriegerät ein Drucker, eine Maus (17), eine Tastatur (12), eine Videokamera oder ein Telefonhörer (25) vorgesehen ist.

9. Peripheriegerät nach Anspruch 8, **dadurch gekennzeichnet, dass** der Telefonhörer (25) einen Energiespeicher (26) aufweist und dass eine Sprachverbindung zu einem Partnergerät (19) mit oder ohne den 1. Kanal (11) oder mit ein- oder ausgeschaltetem Datenverarbeitungssystem (20) aufbaubar ist.

10. Peripheriegerät (12) nach Anspruch 9, **dadurch gekennzeichnet, dass** der Telefonhörer (25) Bedienungs- und/oder Anzeigeelemente enthält.

## Claims

1. Peripheral device (12, 17, 25) that is connected via a first channel (11) to a terminal device (20), that by means of a transmitting/receiving unit (27) and an antenna (9) can be wirelessly connected via a second channel (14) to at least one partner unit (19), **characterised in that** the transmitting/receiving unit (27) (connected to the antenna (9)) and an interface unit (3) are built into the peripheral device (12) and that the first channel (11) and second channel (14) can be connected to the terminal device (20) via the interface unit (3).

2. Peripheral device (12, 17, 25) according to Claim 1, **characterised in that** the data in the second channel (14) can be bi-directionally transmitted via the ISM band of 2.4 GHz.

3. Peripheral device (12, 17, 25) according to Claim 1 or 2, **characterised in that** the second channel (14) is based on a protocol according to the IEEE 802.11 standard.

4. Peripheral device (12, 17, 25) according to one of Claims 1 to 3, **characterised in that** the data transmitted between the terminal device (20) and peripheral device (12) in the first and second channels can be transmitted by multiplexing via the same physical medium.

5. Peripheral device (12, 17, 25) according to one of Claims 1 to 4, **characterised in that** the first channel (11) and/or the second channel (14) are routed via a transmission path between the peripheral device (12, 17, 25) and terminal device (20) which is designed as a USB (Universal Serial Bus).

6. Peripheral device (12, 17, 25) according to one of Claims 1 to 5, **characterised in that** the partner unit (19) is also a terminal device (20) that is connected to a peripheral device (12), into which a transmitting/receiving unit (27) (connected to an antenna (9)) and an interface unit (3) are fitted.

7. Peripheral device (12, 17, 25) according to one of Claims 1 to 6, **characterised in that** a data processing system is provided as the terminal device (20).

8. Peripheral device (12, 17, 25) according to one of Claims 1 to 7, **characterised in that** a printer, a mouse (17), a keyboard (12), a video camera or a telephone receiver (25) is provided as the peripheral device.

9. Peripheral device according to Claim 8, **characterised in that** the telephone receiver (25) has an energy storage device (26) and that a speech link can be established to a partner unit (19) with or without the first channel (11), or with a data processing system (20) switched on or off.

10. Peripheral device (12), according to Claim 9, **characterised in that** the telephone receiver (25) has control and/or display elements.

## Revendications

1. Périphérique (12 ; 17 ; 25), qui est relié par l'intermédiaire d'un premier canal (11) à un terminal (20) qui peut être relié sans fil au moyen d'une unité d'émission et de réception (27) et d'une antenne (9) par l'intermédiaire d'un deuxième canal (14) à au moins un appareil partenaire (19), **caractérisé par le fait que** l'unité d'émission et de réception (27) reliée à l'antenne (9) et une unité interface (3) sont intégrées dans le périphérique (12) et que le premier canal (11) et le deuxième canal (14) peuvent être reliés au terminal (20) par l'intermédiaire de l'unité interface (3).

2. Périphérique (12 ; 17 ; 25) selon la revendication 1, **caractérisé par le fait que** des données dans le deuxième canal (14) peuvent être transmises par l'intermédiaire de la bande ISM de 2.4 GHz de façon bidirectionnelle.

3. Périphérique (12 ; 17 ; 25) selon la revendication 1 ou 2, **caractérisé par le fait que** le deuxième canal (14) repose sur un protocole selon la norme IEEE 802.11.

4. Périphérique (12 ; 17 ; 25) selon l'une des revendications 1 à 3, **caractérisé par le fait que** les données transmises dans le premier et le deuxième canal entre le terminal (20) et le périphérique (12) peuvent être transmises par multiplexage par l'intermédiaire du même milieu physique.

5. Périphérique (12 ; 17 ; 25) selon l'une des revendications 1 à 4, **caractérisé par le fait que** le premier canal (11) et/ou le deuxième canal (14) passent entre le périphérique (12 ; 17 ; 25) et le terminal (20) par l'intermédiaire d'une voie de transmission qui est conçue en tant que Universal Serial Bus USB.

6. Périphérique (12 ; 17 ; 25) selon l'une des revendications 1 à 5, **caractérisé par le fait que** l'appareil partenaire (19) est également un terminal (20) qui est relié à un périphérique (12) dans lequel sont intégrées une unité d'émission et de réception (27) reliée à une antenne (9) et une unité interface (3).

7. Périphérique (12 ; 17 ; 25) selon l'une des revendications 1 à 6, **caractérisé par le fait qu'**un système de traitement de données est prévu comme terminal (20).

8. Périphérique (12 ; 17 ; 25) selon l'une des revendications 1 à 7, **caractérisé par le fait qu'**il est prévu comme périphérique une imprimante, une souris (17), un clavier (12), une caméra vidéo ou un combiné téléphonique (25).

9. Périphérique selon la revendication 8, **caractérisé par le fait que** le combiné téléphonique (25) comporte un accumulateur d'énergie (26) et qu'une liaison vocale peut être établie vers un appareil partenaire (19) avec ou sans le premier canal (11) ou avec le système de traitement de données (20) branché ou débranché.

10. Périphérique (12) selon la revendication 9, **caractérisé par le fait que** le combiné téléphonique (25) contient des éléments de commande et/ou d'affichage.
